# EUROPEAN PATENT APPLICATION

(11) **EP 3 747 280 A1**
(43) Date of publication of application: **09.12.2020**
(21) Application number: 19382483.6
(22) Date of filing: 07.06.2019
(51) Int. Cl.: A23K 20/10, A23K 50/80

(54) **ANTIMICROBIAL COMBINATION FOR USE IN ANIMAL FEEDS**

(71) Applicant: Lucta, S.A., 28006 Madrid (ES)
(72) Inventor: SOLÁ PARERA, José, 08100 MOLLET DEL VALLÉS (ES)
(74) Representative: ZBM Patents - Zea, Barlocci & Markvardsen

(57) **Abstract**

It is provided a combination comprising cinnamaldehyde and cinnamaldehyde ethylene glycol acetal, an animal feed additive comprising the mentioned combination, as well as the combination for use in the prophylactic and/or therapeutic treatment of bacterial infections and/or immune-modulation or for use in improving the FCR or weight gain in terrestrial or aquatic animals. It is also provided an animal feed for terrestrial or aquatic animals with improved stability and traceability of the feed additive combination and a process for its preparation.

## Description

### Technical Field

The present invention relates to the field of animal feed additives. Particularly, it relates to a combination of cinnamaldehyde derived compounds that can be added in animal feeds, and to the combination for use in the prophylactic and/or therapeutic treatment of bacterial infections of terrestrial and aquatic animals. It also relates to a process for the preparation of animal feeds with improved stability and traceability of this antimicrobial combination.

### Background Art

Cinnamaldehyde (CAS 14371-10-9), which is extracted from cinnamon, is a natural compound with activity against bacteria and an immunomodulatory function. Particularly, it is known the use of cinnamaldehyde as an antimicrobial agent and immunostimulant to protect against bacterial infections in fish and shrimp species in aquaculture, as well as in livestock. Thus, cinnamaldehyde has been used as an additive in feed for aquatic animals including fish, such as salmon, and shrimp for protecting the animals against infections caused by pathogenic or opportunistic microorganisms and, as a consequence reducing mortality as well as to improve the feed conversion ratio through modulation of the gut microbiota.

However, cinnamaldehyde has been known to have a low stability in animal feeds, since losses of around 30-50% (or even higher, depending on the thermal treatment of feed) occur in a short period of time such as in 20 to 40 days.

Additionally, given the high reactivity of cinnamaldehyde, its analytical determination in animal feeds, particularly in animal feeds comprising a high protein content, provide inaccurate results and with a high variability depending on the storage time of the sample. As a consequence, traceability of this component in animal feeds is a problem, due both to its interaction with proteins and to losses related to its low stability. Besides, the low stability of cinnamaldehyde in animal feeds implies a diminution of its initial effectiveness.

Document WO2004091307 discloses an animal feed additive, for aquatic or terrestrial animals, which has a plant-derived bioactive primary composition and a plant-derived bioactive secondary composition. Among the possible bioactive compounds both of the primary and of the secondary compositions cinnamaldehyde ethylene glycol acetal is mentioned. Nevertheless, no specific composition comprising this compound is disclosed.

Although it is known that cinnamaldehyde ethylene glycol acetal (CAS 5660-60-6) has a much higher stability than cinnamaldehyde, the inventors have verified that the acetal derivative on their own has a lower antimicrobial and immunostimulant activity than cinnamaldehyde to protect terrestrial and aquatic animals against pathogenic infections.

Therefore, there is a need in farmed animal production to find improved additives for animal feeds that provide a stable, traceable and effective way to prevent the development of common diseases and improve the feed conversion ratio in livestock and aquatic animals such as fish and shrimp.

### Summary of Invention

The present inventors, in an attempt for developing an improved animal feed formulation, have found that by incorporating a combination of cinnamaldehyde and cinnamaldehyde ethylene glycol acetal in an animal feed, particularly in a feed having a high protein content, such us is characteristic for aquatic animals, an appropriate antimicrobial activity is achieved. Additionally, the demonstration of a higher stability of the cinnamaldehyde ethylene glycol acetal, when incorporated in animal feeds, and the higher precision of its analytical determination over time, compared to cinnamaldehyde, advantageously enables its traceability in animal feeds.

It has surprisingly been found that the combination of cinnamaldehyde and cinnamaldehyde ethylene glycol acetal provides an unexpected effect, since even though cinnamaldehyde is having a higher antimicrobial activity than cinnamaldehyde ethylene glycol acetal, when a part of cinnamaldehyde is substituted by the corresponding amount of this cinnamaldehyde derivative, the activity of the mixture is not reduced. This aspect, together with the higher stability of cinnamaldehyde ethylene glycol acetal, enables maintaining the efficacy of the feed over time. Besides, the traceability of cinnamaldehyde ethylene glycol acetal as opposed to cinnamaldehyde, particularly when incorporated in an animal feed having a high protein content, constitutes a great commercial advantage since it allows monitoring the amount of this antimicrobial combination in the final product and its stability during feed manufacturing and storage.

Thus, in a first aspect the present invention relates to a combination comprising cinnamaldehyde and cinnamaldehyde ethylene glycol acetal.

In a second aspect, the present invention relates to an animal feed additive for terrestrial and aquatic animals, including livestock and aquaculture species (namely crustaceans, fishes, molluscs, cephalopods, reptiles, amphibious and other invertebrates), comprising cinnamaldehyde and cinnamaldehyde ethylene glycol acetal and food, feed or pharmaceutically acceptable excipients or carriers.

In a third aspect, the present invention relates to an animal feed for terrestrial and aquatic animals, including livestock and aquaculture species, comprising a prophylactically and/or therapeutically effective amount of the animal feed additive as defined herein above and below.

In a fourth aspect, the present invention relates to a process for the preparation of an animal feed for terrestrial or aquatic animals, including livestock and aquaculture species, as defined herein above and below comprising the steps of:
a) providing a mixture of cinnamaldehyde and cinnamaldehyde ethylene glycol acetal, optionally in a food, feed or pharmaceutically acceptable excipient or carrier in order to obtain an animal feed additive;
b) mixing the animal feed additive obtained in step a) with a feed in order to obtain an animal feed as defined herein above and below.

The animal feed additive of the present disclosure can be used as an antimicrobial and/or immunostimulant to protect terrestrial or aquatic animals, including livestock and aquaculture species, against pathogenic infections.

Accordingly, another aspect the invention relates to a combination comprising cinnamaldehyde and cinnamaldehyde ethylene glycol acetal for use in the prophylactic or therapeutic treatment of bacterial infections in terrestrial and aquatic animals including livestock and aquaculture species such as fish or shrimp. This aspect can also be formulated as the use of a combination comprising cinnamaldehyde and cinnamaldehyde ethylene glycol acetal for the manufacture of an animal feed for the prophylactic or therapeutic treatment of bacterial infections in terrestrial and aquatic animals including livestock and aquaculture species such as fish or shrimps. It also relates to a method for the prophylactic or therapeutic treatment of bacterial infections in terrestrial and aquatic animals including livestock and aquaculture species such as fish or shrimps susceptible to being or already infected by bacteria comprising administering a prophylactic or therapeutic effective amount of the animal feed additive as defined herein above or below to the terrestrial or aquatic animal in need of the treatment.

Additionally, another aspect of the invention relates to a combination comprising cinnamaldehyde and cinnamaldehyde ethylene glycol acetal for use in improving the feed conversion ratio (FCR) or weight gain of terrestrial and aquatic animals, including livestock and aquaculture species such as fish or shrimps.

Fig. 1 shows the amount of cinnamaldehyde (AC) measured over time in samples of an animal feed for aquatic animals containing cinnamaldehyde (AC) stored at freezer temperature (FT) or at room temperature (RT).

Fig. 2 shows the amount of cinnamaldehyde (AC) and of cinnamaldehyde ethylene glycol acetal (EAAC) measured over time in samples of an animal feed for aquatic animals containing a mixture of AC and EAAC in a molar ratio of 50:50, stored at freezer temperature (FT) or at room temperature (RT).

### Detailed description of the invention

All terms as used herein in this application, unless otherwise stated, shall be understood in their ordinary meaning as known in the art. Other more specific definitions of terms as used in the present application are as set forth below and are intended to apply uniformly throughout the specification and claims unless an otherwise expressly set out definition provides a broader definition.

The term "animal feed additive" refers to a composition suitable for or intended for being incorporated in an animal feed.

The term "animal feed" refers to a preparation or mixture suitable for or intended for intake by an animal.

The term "feed conversion ratio (FCR)" refers to a measure of an animal's efficiency in converting feed mass input into increases of the desired output. In animals raised for meat (such as livestock, shrimp and fish) the output is the body mass gained by the animal. FCR is calculated as feed intake divided by weight gain, all over a specified period. Improvement in FCR means reduction of the FCR value.

The term "room temperature" (RT) refers to about 20 °C to 25 °C and the term "freezer temperature" (FT) refers to about -20 °C to -16 °C.

The expression "effective amount", as used herein, refers to the minimal amount of a substance and/or agent, which is enough to achieve a desired and/or required effect. For example, an effective amount of an "animal feed additive comprising cinnamaldehyde and cinnamaldehyde ethylene glycol acetal" is the minimum amount required in order to obtain a composition such as an animal feed having the desired properties associated therewith. In particular, the desired or required effects can be the prophylactic or therapeutic treatment of cultured aquatic animals susceptible to being or already infected by bacteria in aquaculture, and/or improving the feed conversion ratio (FCR) or weight gain of terrestrial or aquatic animals including livestock and aquaculture species such as fish or shrimps.

The expression " prophylactically and/or therapeutically effective amount" as used herein, refers to the amount of a compound that, when administered, is enough to prevent the development of, or alleviate to some extent, one or more of the symptoms of the disorder or condition being treated. The particular dose of compound administered according to this invention will of course be determined by the particular circumstances surrounding the case, including the particular condition being treated, the duration of the treatment, the nature of any concurrent treatment, the specific combination of active ingredient used, and any other factor known to the expert.

The expression "total equivalent amount of cinnamaldehyde ", when having a mixture of cinnamaldehyde and cinnamaldehyde ethylene glycol acetal, refers to the amount of cinnamaldehyde in the form of cinnamaldehyde itself and of cinnamaldehyde ethylene glycol acetal, the latter being expressed as the corresponding amount of cinnamaldehyde.

The term "percentage by weight" or "wt%" refers to the percentage by weight of the ingredient per weight of the overall composition, unless otherwise stated.

As mentioned above, the combination or the animal feed additive for terrestrial or aquatic animals of the invention comprises cinnamaldehyde and cinnamaldehyde ethylene glycol acetal.

In a particular embodiment of the combination or of the animal feed additive for terrestrial or aquatic animals of the present disclosure, optionally in combination with one or more features of the particular embodiments defined above, the molar ratio of cinnamaldehyde to cinnamaldehyde ethylene glycol acetal is from 20:80 to 80:20, or from 25:75 to 75:25, or from 30:70 to 70:30, or from 40:60 to 60:40, or 50:50. More particularly, of 50:50 or of 75:25.

The combination or animal feed additive for terrestrial or aquatic animals of the present disclosure can be incorporated in an animal feed composition in order to obtain an animal feed comprising cinnamaldehyde to cinnamaldehyde ethylene glycol acetal as additional components. Molar ratios of the different components in the combination or animal feed additive correspond to the weight ratios of the same components in the animal feed.

In an embodiment of the animal feed of the present disclosure, optionally in combination with one or more features of the particular embodiments defined above, cinnamaldehyde and cinnamaldehyde ethylene glycol acetal are in a total amount equivalent to from 0.01 g to 2.5 g of cinnamaldehyde per each kg of animal feed. In another embodiment, the total equivalent amount of cinnamaldehyde is from 0.05 g to 1.5 g, or from 0.1 g to 1.0 g per each kg of animal feed. In a particular embodiment the total equivalent amount of cinnamaldehyde is 0.5 g per each kg of animal feed.

The incorporation of the combination or animal feed additive of the present disclosure in an animal feed composition in order to obtain an animal feed comprising the specific combination of cinnamaldehyde and cinnamaldehyde ethylene glycol acetal as defined above, particularly in the relative amounts also stated above, allows providing a stable animal feed wherein cinnamaldehyde ethylene glycol acetal is traceable. Thus, the sought efficiency of the prophylactic or therapeutic treatment can be achieved without the activity of the active ingredients being significantly reduced over time, while allowing the traceability of the specific combination of cinnamaldehyde ethylene glycol acetal and cinnamaldehyde.

As mentioned above, the animal feed additive and animal feed of the present disclosure can be used with terrestrial and aquatic animals, including livestock and aquaculture species. Examples of livestock are cattle, buffaloes, sheep, goats, pigs, chickens, ducks, geese, turkeys, horses, asses, mules, camels and rabbits. Examples of aquatic animals are crustaceans (e.g. shrimps and crabs), fishes (e.g. salmon, bream, bass, carps, tilapias, and catfishes), molluscs (e.g. clams, oysters, and abalone), cephalopods (e.g. octopus and cuttlefishes) and other invertebrates (e.g. sea cucumbers and sea urchins).

In another embodiment of the animal feed of the present disclosure, optionally in combination with one or more features of the particular embodiments defined above, the animal feed has a high protein content, i.e. a protein content from 20 to 60 wt%, from 25 to 55 wt%, or from 30 to 50 wt%.

In another embodiment, the animal feed is a fish feed or a shrimp feed.

The animal feed additive and animal feeds of the present disclosure can be prepared by conventional methods known to those skilled in the art, such as the one described in the examples. As an example, a process for the preparation of an animal feed as defined herein above and below can comprise the steps of mixing cinnamaldehyde, cinnamaldehyde ethylene glycol acetal and, optionally, a food, feed or pharmaceutically acceptable excipient or carrier in order to obtain an animal feed additive and, then, mixing the animal feed additive with an animal feed composition. As an example, ingredients of a feed composition can be mixed for instance in a mixer, then the mixture can be mixed with the feed additive in order to obtain a feed in the form of a powder. Alternatively, the feed composition can be transformed in pellets by extrusion or pressing, and then the feed additive of the present disclosure comprising water or an edible oil such as a vegetable oil can be coated onto the pellets, particularly in the amounts defined herein above, in order to obtain the final animal feed.

Examples of food, feed or pharmaceutically acceptable excipients or carriers include vegetable oils such as soybean oil; emulsifying agents such us lecithins and binders such as colloidal silica.

Animal feed compositions wherein the combination of the animal feed additive of the present disclosure can be added are commercially available.

As an example, an animal feed composition for terrestrial or aquatic animals can comprise one or more components selected from proteins, carbohydrate, lipids including animal fats, vegetable meals, vegetable oils, gluten, amino acids and other allowed feed additives and feed materials.

Throughout the description and claims the word "comprise" and variations of the word, are not intended to exclude other technical features, additives, components, or steps. Furthermore, the word "comprise" encompasses the case of "consisting of".

The following examples and drawings are provided by way of illustration, and they are not intended to be limiting of the present invention. Furthermore, the present invention covers all possible combinations of particular and preferred embodiments described herein.

### Examples

### Example 1 - Preparation of animal feed samples

In order to determine the stability of the active ingredients cinnamaldehyde and cinnamaldehyde ethylene glycol acetal in an animal feed having a high protein content, several samples of a fish feed were prepared as follow.

Two feed additive mixtures were used, one of them only containing cinnamaldehyde as active ingredient (mixture A) and another one containing cinnamaldehyde and cinnamaldehyde ethylene glycol acetal (mixture B).

The animal feed used was a commercial fish feed having a 52 wt% of crude protein.

Two 200 g samples of the commercial feed were taken for the application of each of the mixtures A and B.

A sterile plastic bag was spread out on a laboratory tray, and 200 g of the commercial feed was deposited on it. With the help of a liquid diffuser bottle, by means of short pulsations, 3 g of the mixture A, previously diluted to 10 wt% in vegetable oil, was applied to the feed.

The bag was closed and shaken, and the feed additive mixture was spread by manual friction in order to distribute it homogeneously all over the feed. Then, the feed containing the mixture A was put in a plastic container. The same process was carried out with mixture B instead of mixture A.

Each of these feed samples (200 g) containing mixture A or mixture B were divided into two and put into sterile cans (100 g of feed in each) for the different thermal treatments at room temperature (RT) and freezer temperature (FT).

### Example 2 - Stability test in an animal feed

### 2.1 Quantification method for cinnamaldehyde and cinnamaldehyde ethylene glycol acetal in feed

To analyse cinnamaldehyde (AC) and cinnamaldehyde ethylene glycol acetal (EAAC) in feed samples at low levels, an analytical method sensitive enough to detect ppm (mg/kg) quantities and selective enough to avoid confusing the different components with sample interferences is needed. Thus, an analytical method by capillary gas chromatography (high separation efficiency) and flame ionization detection (high sensitivity) (GC/FIB) was developed. An Accelerated Solvent Extractor (ASE) extraction was made on the experimental feed samples and residual fats were eliminated from the chromatographic column using backflush.

The equipment used was the following:

| | |
|---|---|
| Extractor: | Accelerated Solvent Extractor (ASE-350) Dionex-Thermo |
| Evaporator: | Supervap FMS |
| Centrifuge: | Mikro 220R Hettich |
| Chromatograph: | 7890B Agilent, split/splitless injector |
| Detector: | Flame Ionization Detector FID |
| Software: | OpenLab 2.0 |
| Injector: | Agilent 7693A Autosampler |
| Column: | DB-WAX Ultra Inert, 30 m x 0.25 mm id x 0.25 µm. |

### Chromatographic conditions:

### Oven:

Initial Temperature: 60 °C
Initial Time: 0 min
Rate: 4 °C/min
Final Temperature: 230 °C
Final Time: 2.5 min

### Injector:

Constant Pressure Mode
Carrier gas: Helium
Flow: 2.6 ml/min.
Injection Temperature: 250 °C
Injection Volume: 1 µl
Injection Type: split 1/15
Glass liner: 900 µl with silanized glass wool

### Backflush:

Temperature: 230 °C
Time: 10 min
Inlet Pressure: 13.7 kPa
Outlet Pressure: 290 kPa
Flow to inlet: 2.8 ml/min

### FID Detector:

Air flow: 400 ml/min
Hydrogen flow: 30 ml/min
Make up (Nitrogen) flow: 25 ml/min

### Retention time data:

| Component | Retention time (min) |
|---|---|
| Cinnamaldehyde (AC) | 30.1 |
| Cinnamaldehyde ethylene glycol acetal (EAAC) | 36.8 |

### Preparation of Standards

In a 10 ml beaker about 0.1 g of each cinnamaldehyde and EAAC where exactly weighed and made up with 80% hexane/20% acetone. A 1% (10,000 mg/l) mother solution was obtained, which was used to prepare the standards. It was kept in a refrigerator (4 °C; shelf life: 1 month).

From the mother solution, standards of 1000, 100, 10 and 1 ppm were prepared by serial dilution with 80% hexane/20% acetone. The last three solutions were used to quantify.

### Preparation of test samples

In a mortar, about 5 g of the experimental feed sample were exactly weighted. 3 g of Celite 545 were added and mixed. The mixture was put in an ASE extraction cell (22 ml) and the sample was extracted with an 80%/20% hexane/acetone mixture at 100 °C and 1500 psi with 5 successive cycles (heating time 5 min, flush 40%, purge 60s) using an ASE equipment.

After extraction, enough anhydrous sodium sulfate was added to the extracts to absorb remaining water and solid residues. All the liquid extract was collected in a 50 ml beaker. The sodium sulfate was cleaned from the extraction tubes with some ml of the 80% /20% hexane/acetone mixture and added to the beaker. It was made up with the 80% /20% hexane/acetone mixture and mixed thoroughly. In a 2 ml glass vial to the GC/FID about 1 ml of the extract was taken. When some precipitate appeared, it was centrifuged at 6000 rpm 5 min.

### Spiked sample extraction method

The same protocol shown above was performed with the experimental feed samples but adding previously 0.2 ml of the 10,000 mg/l standard to 5 g of feed in the ASE extraction cell.

### Working method

The standards, the experimental feed sample extract and its corresponding spiked sample extract were injected in the GC/FID equipment, minimum by duplicate, using the chromatographic conditions given above. The quantity spiked to the feed sample was at least the same quantity expected in the feed sample. If the area of the spiked sample didn't double at least the area of the corresponding non spiked sample, a high concentration of standard was used to spike the sample.

### Calculation of results

Results were calculated by standard addition method, taking into account the weight of the feed samples extracted and the standard concentrations.

### 2.2 Results of the stability test in the animal feed

Table 1 below shows the amount of cinnamaldehyde (AC) measured over time in the feed samples containing cinnamaldehyde (AC) stored at freezer temperature (FT) and at room temperature (RT).

**Table 1**

| Active ingredient and storage T | | Amount of active agent (mg/kg) | | | | | | |
|---|---|---|---|---|---|---|---|---|
| | | 0 days | 7 days | 14 days | 21 days | 28 days | 35 days | 42 days |
| AC | FT | 404 | 459 | 395 | 446 | 339 | 338 | 336 |
| | RT | 404 | 250 | 340 | 282 | 174 | 161 | 141 |

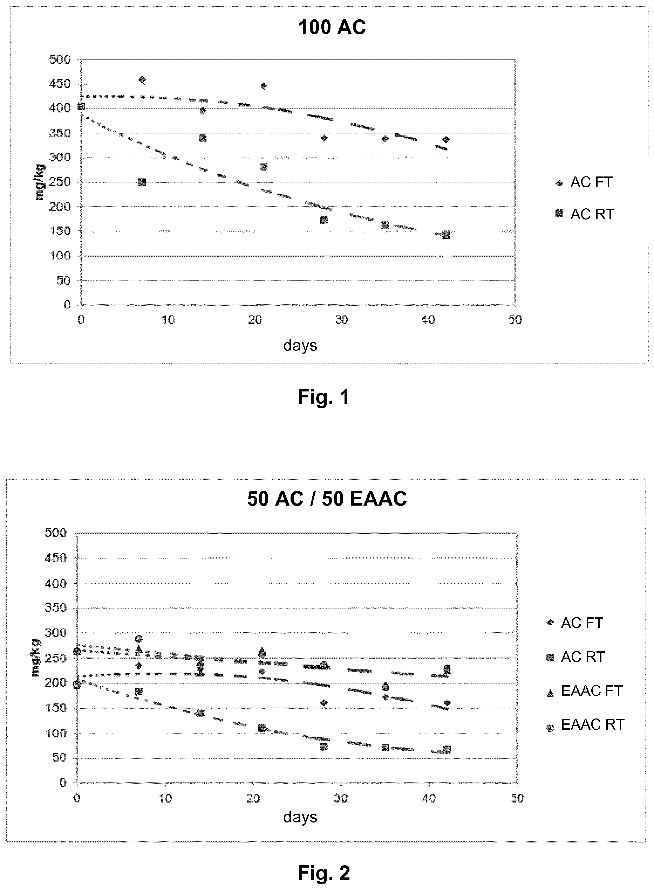

These results are depicted in Fig. 1.

Table 2 below shows the amount of cinnamaldehyde (AC) and of cinnamaldehyde ethylene glycol acetal (EAAC) detected over time in the feed samples containing a mixture of AC and EAAC in a molar ratio of 50:50, stored at freezer temperature (FT) or at room temperature (RT).

**Table 2**

| Active ingredient and storage T | | Amount of active agent (mg/kg) | | | | | | |
|---|---|---|---|---|---|---|---|---|
| | | 0 days | 7 days | 14 days | 21 days | 28 days | 35 days | 42 days |
| AC | FT | 197 | 235 | 229 | 224 | 160 | 173 | 160 |
| AC | RT | 197 | 184 | 140 | 111 | 73 | 71 | 67 |
| EAAC | FT | 264 | 269 | 220 | 265 | 238 | 197 | 224 |
| EAAC | RT | 264 | 288 | 236 | 258 | 237 | 191 | 229 |

These results are depicted in Fig. 2.

### Example 3 - In vitro bacteriostatic activity of oil-based feed additives

A study was carried out to determine the bacteriostatic activity towards shrimp and fish pathogens of a composition containing AC and EAAC at different ratios in sunflower oil, wherein the total equivalent amount of AC is 66.50 wt% with respect to the total composition.

Samples shown in Table 3 below were prepared.

**Table 3**

| Ingredient | Comp. Ex. 1 | Comp. Ex. 2 | Ex. 1 | Ex. 2 | Ex. 3 |
|---|---|---|---|---|---|
| | molar ratio | | | | |
| | AC:100 | AC:0 | AC:75 | AC:50 | AC:25 |
| | EAAC: 0 | EAAC: 100 | EAAC: 25 | EAAC:50 | EAAC: 75 |
| | weight ratio | | | | |
| AC | 66.50 | 0.00 | 49.87 | 33.25 | 16.62 |
| EAAC | 0.00 | 88.67 | 22.17 | 44.33 | 66.50 |
| Sunflower oil | 33.50 | 11.33 | 27.96 | 22.42 | 16.88 |
| Total | 100.00 | 100.00 | 100.00 | 100.00 | 100.00 |
| Total AC* | 66.50 | 66.50 | 66.50 | 66.50 | 66.50 |

| | | | | | |
|---|---|---|---|---|---|
| * Total equivalent amount of AC either in the form of AC or EAAC. | | | | | |

The antibacterial activity of the combination of the invention was assessed against some of the most common fish and shrimp bacterial pathogens by finding the Minimum Inhibitory Concentration (MIC). In Table 3 below the bacterial pathogens tested are shown.

**Table 4**

| Species | Strain | Disease | Target organism |
|---|---|---|---|
| *Vibrioparahaemolyticus* | MO904 | AHPND/EMS | Shrimp |
| *Vibrio alginolyticus* | LMG4409 | OpportunisticVibriosis | Shrimp |
| *Vibrio vulnificus* | LMG 16852 | OpportunisticVibriosis | Shrimp |
| *Streptococcusagalactiae* | LMG 15977 | Menningoencephalitis | Fish |
| *Streptococcus iniae* | LMG 14520 | Menningoencephalitis | Fish |
| *Aeromonashydrophila* | AH-1 N | Septicaemia/opportunistic | Fish |
| *Vibrio anguilarum* | HI610 | Acute Vibriosis | Fish/Shrimp |

It was tested whether the experimental products (i.e. comparative examples 1 and 2, and examples 1 to 3) could inactivate diverse shrimp or fish and shrimp bacterial pathogens when directly interacting under an *in vitro* setting. The MIC assay can be carried out following the procedure disclosed in Parasa, L.S. *et al.* (cf. Parasa, L.S. et al. "In vitro antibacterial activity of culinary spices aniseed, star anise and Cinnamon against bacterial pathogens of fish", International Journal of Pharmacy and Pharmaceutical Sciences, 2012, Vol. 4, pp. 667-670), but with the following setup:
Test samples: a series of 10 concentrations from 12000 to 23.44 mg/l, in two-fold dilutions
Temperature: 27 °C
Salinity: 20 g/l
pH: 7.5

Bacterial growth was evaluated by visual and optical density.

The MIC assay was aimed at determining the minimum concentration of experimental product that could completely inhibit the growth of the experimental bacteria in a liquid medium. This intended to simulate a situation where the experimental products interact with pathogens in liquid phases such as digestive fluids or seawater. MIC is a direct but inverse measure for the power of the experimental product bacteriostatic activity towards pathogens. The lower the MIC, the higher the inhibiting power of the experimental product.

The activity of the antibiotic gentamycin against *Vibrio campbellii* (positive control) showed inhibition at the expected concentration of 4 mg/L. The control for bacterial growth (no antibacterial product) showed normal growth. The control for bacterial contamination of the culture medium did not show any bacterial growth, as expected. These results confirm the correct execution of this MIC test.

Overall, the MIC values were ranging between 1500 - 93.8 mg/L, with much higher bacteriostatic activity than regular feed additives in general. Interestingly, all 5 experimental products exerted a strong inhibition against the fish and shrimp pathogen *V. anguillarum* with a MIC value ranging between 375 to 93.8 mg/L. Experimental product Comp. Ex. 1 exerted strongest inhibition towards all the tested pathogens.

Table 5 shows an overview of the results of MIC values of each experimental product towards each experimental bacterium (mg/L).

**Table 5**

| Experimental products | Bacterium | | | | | |
|---|---|---|---|---|---|---|
| | MIC (mg/L; pH 7.4) | | | | | |
| | *V. parahaemolyticus MO904* | *V. alginolyticus LMG4409* | *V. vulnificus LMG16852* | *S. agalactiae LMG15977* | *A. hydrophila AH-1 N* | *V. anguilarum HI610* |
| Gentamycin | - | - | - | - | - | - |
| **Comp. Ex. 1** | 375 | 375 | 187.5 | 375 | 187.5 | 93,8 |
| **Comp. Ex. 2** | 1500 | 750 | 750 | 6000 | 750 | 375 |
| **Ex. 1** | 375 | 375 | 187.5 | 750 | 187.5 | 93,8 |
| **Ex. 2** | 375 | 750 | 187.5 | 750 | 375 | 187.5 |
| **Ex. 3** | 750 | 750 | 750 | 1500 | 750 | 187.5 |
| **Sunflower oil** | >12000 | 3000 | 6000 | 12000 | 3000 | 750 |

The results show that the combination of AC and EAAC is particularly advantageous since it maintains its antibacterial activity against some of the most common shrimp and fish bacterial pathogens while showing a stable level in feed over time and in different storage conditions (temperature) allowing the traceability of at least the EAAC. Surprisingly, the mentioned combination can also show a synergic effect. Particularly, for several bacterial pathogens, the partial substitution of AC by EAAC does not decreases the antibacterial activity observed when AC is used alone (see for instance results of examples 1 and 2 for *V. parahaemolyticus* MO904, *V. alginolyticus* LMG4409, *V. vulnificus* LMG16852, *A. hydrophila* AH-1 N, and *V. anguilarum* HI610), even though AC is having a higher activity than EAAC towards all the tested pathogens.

### Citation List

1. WO2004091307
2. Parasa, L.S. et al. "In vitro antibacterial activity of culinary spices aniseed, star anise and Cinnamon against bacterial pathogens of fish", International Journal of Pharmacy and Pharmaceutical Sciences, 2012, Vol. 4, pp. 667-670

## Claims

1. A combination comprising cinnamaldehyde and cinnamaldehyde ethylene glycol acetal.

2. An animal feed additive for terrestrial and aquatic animals comprising cinnamaldehyde and cinnamaldehyde ethylene glycol acetal and food, feed or pharmaceutically acceptable excipients or carriers.

3. The combination or the animal feed additive for terrestrial and aquatic animals according to claims 1 or 2, wherein the molar ratio of cinnamaldehyde to cinnamaldehyde ethylene glycol is from 20:80 to 80:20.

4. The combination or animal feed additive for terrestrial and aquatic animals of claim 3, wherein the molar ratio of cinnamaldehyde to cinnamaldehyde ethylene glycol is from 25:75 to 75:25.

5. The combination or animal feed additive for terrestrial and aquatic animals of claim 4, wherein the molar ratio of cinnamaldehyde to cinnamaldehyde ethylene glycol is from 30:70 to 70:30.

6. The combination or animal feed additive for terrestrial and aquatic animals of claim 5, wherein the molar ratio of cinnamaldehyde to cinnamaldehyde ethylene glycol is from 40:60 to 60:40.

7. The combination or animal feed additive for terrestrial and aquatic animals of claim 6, wherein the molar ratio of cinnamaldehyde to cinnamaldehyde ethylene glycol acetal is 50:50 or 75:25.

8. An animal feed for terrestrial or aquatic animals comprising a prophylactically and/or therapeutically effective amount of the combination or animal feed additive as defined in claims 1 to 7.

9. The animal feed for terrestrial or aquatic animals of claim 8, wherein cinnamaldehyde and cinnamaldehyde ethylene glycol acetal are in a total amount equivalent to from 0.01 g to 2.5 g of cinnamaldehyde per each kg of animal feed.

10. The animal feed for terrestrial or aquatic animals of claim 9, wherein cinnamaldehyde and cinnamaldehyde ethylene glycol acetal are in a total amount equivalent to 0.5 g of cinnamaldehyde per each kg of animal feed.

11. The animal feed for terrestrial or aquatic animals according to any one of claims 8 to 10, which has a protein content from 20 to 60 wt%.

12. The animal feed for terrestrial or aquatic animals according to any one of claims 8 to 11, which is a fish feed or a shrimp feed.

13. A a process for the preparation of an animal feed for terrestrial or aquatic animals, including livestock and aquaculture species, as defined herein above and below comprising the steps of:
a) providing a mixture of cinnamaldehyde and cinnamaldehyde ethylene glycol acetal, optionally in a food, feed or pharmaceutically acceptable excipient or carrier in order to obtain an animal feed additive;
b) mixing the animal feed additive obtained in step a) with a feed in order to obtain an animal feed as defined in claims 8 to 12.

14. A combination comprising cinnamaldehyde and cinnamaldehyde ethylene glycol acetal as defined in any one of claims 1 to 7 for use in the prophylactic and/or therapeutic treatment of bacterial infections in terrestrial and aquatic animals including livestock and aquaculture species such as fish or shrimp.

15. A combination comprising cinnamaldehyde and cinnamaldehyde ethylene glycol acetal as defined in any one of claims 1 to 7 for use in improving the feed conversion ratio (FCR) or weight gain of terrestrial and aquatic animals, including livestock and aquaculture species such as fish or shrimps.
